# EUROPÄISCHE PATENTSCHRIFT

(11) **EP 0 831 308 B1**
(45) Veröffentlichungstag und Bekanntmachung des Hinweises auf die Patenterteilung: **07.04.2010**
(21) Anmeldenummer: 97116543.6
(22) Anmeldetag: 23.09.1997
(51) Int. Cl.: G01F 23/296

(54) **Gerät zur Bestimmung des Füllstands einer Flüssiggasflasche**
Apparatus for determining the filling level of a liquefied gas bottle
Appareil pour la détermination du niveau de remplissage d'une bouteille de gaz liquide

(30) Priorität: 23.09.1996 DE 19639017; 17.03.1997 DE 19711093
(43) Veröffentlichungstag der Anmeldung: 25.03.1998
(73) Patentinhaber: Reich KG, Regel- und Sicherheitstechnik, 35713 Eschenburg (DE)
(72) Erfinder: Bender, Helmuth, 35713 Eschenburg-Wissenbach (DE); Roelvink, Hans, 3011 VB Rotterdam (NL); Veltmann, Andre, 5627 Eindhoven (NL)
(74) Vertreter: Hofstetter, Alfons J.

(56) Entgegenhaltungen:
- EP-A- 0 119 790
- WO-A-82/01584
- WO-A-84/00210
- DE-A1- 4 140 113
- GB-A- 2 126 342
- GB-A- 2 298 279
- US-A- 3 802 252
- US-A- 4 535 627
- US-A- 4 869 097
- STUCKMAN B E ET AL: "ELECTRONIC MEASUREMENT OF FLUID LEVEL USING ACOUSTIC SENSORS" PROCEEDINGS OF THE 32ND MIDWEST SYMPOSIUM ON CIRCUITS AND SYSTEMS, 14. - 16.August 1989, CHAMPAIGN, ILL., US, Seiten 697-700, XP000139748
- V.A.LAPTEV ET AL.: "Acoustic Resonance Method of Measuring the Quantity of Liquid and Bulk Materials" MEASUREMENT TECHNIQUES., Bd. 20, Nr. 2, Februar 1977, NEW YORK US, Seiten 235-236, XP002059068

## Beschreibung

Die vorliegende Erfindung bezieht sich auf ein Gerät zur Bestimmung des Füllstands einer Gasflasche, nämlich von Gasflaschen, wie sie im Campingbereich, in Booten, Wohnwagen, Wohnmobilen, in Ferienhäusern, aber auch im Haushalt oder vom Handwerker als transportable Energiequelle zum Erhitzen mit offener Flamme benutzt werden.

Der Verwender kann bislang den Inhalt oder Restinhalt dieser Gasflaschen aus druckfestem Metall z.B. durch Abwiegen mittels einer Waage bestimmen. Das ist nicht immer möglich. Es ist auch notwendig, das Leergewicht der Flasche genau zu kennen und der Füllgrad muß aus einer Gewichtsdifferenz rechnerisch ermittelt werden. Der ganze Vorgang ist arbeits- und zeitaufwendig sowie ungenau.

Es ist weiterhin bekannt, temperatursensible Streifen am Mantel der Gasflaschen zu befestigen. Aufgrund der Temperaturdifferenz zwischen dem mit Flüssiggas angefüllten Bereich der Gasflasche und dem bereits entleerten kann eine ungefähre Abschätzung des Füllstandes getroffen werden. Auch diese Lösung ist jedoch nur sehr ungenau und u.a. auch durch Außentemperaturschwankungen beeinflussbar.

Dagegen beschreibt die DE 41 40 113 A1 eine berührungslose Füllstandsmessung mit Ultraschall in Gasflaschen mit flüssigem Gas. Dabei wird ein speziell ausgebildeter Adapter auf eine normale Stahlflasche mit Flüssiggas geschraubt, wobei dieser den Füllstand in der Gasflasche mittels Ultraschall misst und anzeigt. Hierbei ist es jedoch notwendig, den speziell ausgebildeten Adapter auf jeder einzelnen Gasflasche zu installieren. Die damit verbundenen Kosten sind hoch und lassen den Einsatz eines derartigen Adapters z.B. im Campingbereich, in Wohnwagen und Wohnmobilen nicht zu.

EP 0 119 790 A1 beschreibt ein Verfahren und eine Vorrichtung, bei denen durch Einstrahlen unterschiedlicher Frequenzen die Resonanzfrequenz eines Behälters bei unterschiedlichen Füllgraden zur Erzeugung einer Referenzkurve ermittelt wird, um später durch Ermittlung einer Frequenz des Behälters unter Verwendung der Referenzkurve dessen Füllstand zu ermitteln.

GB 2 298 279 A beschreibt in der Beschreibungseinleitung zum Stand der Technik ein Verfahren, bei dem die Resonanz eines Behälters ermittelt wird, um das Niveau einer darin enthaltenen Flüssigkeit zu bestimmen. Dazu werden variierende Frequenzen eingestrahlt. Dieses Verfahren wird jedoch für Gasflaschen mit geschweißter Behälterwand und eingesetzten Böden als ungeeignet angesehen, weshalb ein einem Echolot vergleichbares Verfahren vorgeschlagen wird, bei dem an bestimmten Positionen dieser Gasflaschen Frequenzen eingestrahlt werden, so dass deren rückgestrahlte Frequenz nur bei leerer Gasflasche ein Maximum aufweist.

Ausgehend davon liegt der Erfindung die Aufgabe zugrunde, die Messgenauigkeit eines Gerätes zur Bestimmung des Inhaltes einer Gasflasche zu erhöhen.

Die Lösung dieser Aufgabe erfolgt erfindungsgemäß mit den Merkmalen des Anspruch 1.

Vorteilhafte Ausgestaltungen sind in den Unteransprüchen beschrieben.

Das erfindungsgemäße Gerät zur Bestimmung des Füllstands einer Gasflasche umfasst mindestens je einen Schallsender und -empfänger, welche mit ihrer Wirkfläche auf die Mantelfläche der Gasflasche auflegbar sind. Dabei wird ein vom Schallsender ausgesendetes Sendesignal und ein vom Schallempfänger empfangenes Empfangssignal mittels eines Mikroprozessors verglichen, so dass eine für den Füllstand der Gasflasche charakteristische Resonanz der Gasflasche ermittelt wird. Die Wirkungsweise der Erfindung beruht auf dem Prinzip, dass sich die Resonanzfrequenz der Gasflasche mit dem Füllstand und dem Gasdruck ändert, wobei sich dass erfindungsgemäße Gerät durch einen Temperaturfühler auszeichnet, mit welchem während einer Messperiode die Flaschentemperatur aufnehmbar ist, wobei die für die Resonanz der Gasflasche kennzeichnende Signalamplitude um den Temperaturmesswert korrigiert wird. Dabei wird der Gasdruck durch die zu ihm proportionale Temperatur der Gasflasche aufgenommen. Beide Messergebnisse werden von einer Schaltung zu einer Anzeige verarbeitet, die eine berichtigte Empfangsfrequenz-Amplitude sekundenschnell anzeigt, welche repräsentativ für den Füllstand ist.

Das erfindungsgemäße Gerät ist so ausgebildet, dass es lediglich auf die Gasflasche aufgesetzt werden muß. Dadurch ist eine einfache und von jedermann leicht anwendbare Art der Inhaltsbestimmung durchführbar. Zudem muss das erfindungsgemäße Gerät nicht mit der jeweiligen zu messenden Gasflasche permanent verbunden werden, so dass ein Gerät zur Messung einer beliebigen Anzahl von Gasflaschen ausreicht. Damit ist eine kostengünstige Messung der Füllmenge von Gasflaschen möglich.

Die Resonanzfrequenz wird vorzugsweise beim langsamen Durchfahren durch ein Frequenzspektrum von z.B. mit 250 Hz beginnend und bis 2500 Hz hochfahrend bestimmt.

In einer weiteren vorteilhaften Ausgestaltung sind die vom Schallsender ausgesendeten Sendesignale gepulst. Durch die Abfolge des Sendesignals "Senden, Warten und Hören", das insgesamt mehrfach pro Sekunde durchgeführt wird, erhöht sich die Empfindlichkeit für die Resonanzfrequenz der Gasflasche deutlich. Dies wiederum gewährleistet eine exakte Füllstandsmessung.

In weiteren vorteilhaften Ausgestaltungen des erfindungsgemäßen Gerätes können der Sender und der Empfänger aus zwei piezo-elektrischen Elementen bestehen oder aus einem Lautsprecher und einem Mikrophon.

In einer weiteren vorteilhaften Ausgestaltung der Erfindung umfasst das Gerät zur Bestimmung des Füllstands einer Gasflasche ein tragbares Gehäuse aus Kunststoff. Dieses Gehäuse ist aus mehreren Elementen, nämlich einer Schale zur Aufnahme des Schallsenders und -empfängers, einem Deckel und einem entsprechenden Batteriedeckel bzw. -fach aufgebaut. Dabei weist die Schale an der dem Deckel abgewandten Seite eine der Mantelform der Gasflasche entsprechende Form auf. Dadurch ist eine gute Verbindung zwischen der Wirkfläche des Schallsenders und -empfängers und der Mantelfläche der Gasflasche gewährleistet. Zur lösbaren Befestigung des erfindungsgemäßen Gerätes an der Gasflasche kann zudem an der dem Deckel abgewandten Seite der Schale mindestens ein Magnet angeordnet sein.

In einer weiteren vorteilhaften Ausgestaltung des erfindungsgemäßen Gerätes sind der Sender und der Empfänger an sich gegenüberliegenden Innenseiten von Armen einer Zange an einem alle Teile umfassenden Gehäuse angeordnet. Die Zange ist dabei um den Umfang der Gasflasche klemmbar. Die Zange kann dabei mit dem Gehäuse beweglich oder starr verbunden sein. Insbesondere sind der Sender und der Empfänger in einer starr mit dem Gehäuse verbundenen Zange um zwei Achsen zur exakten tangentialen Ausrichtung gegenüber der Mantelfläche der Gasflasche beweglich angeordnet.

Damit stets eine korrekte Anlage von Messsender und -empfänger gewährleistet ist, befindet sich zwischen den beiden Armen der Zange und dem Gehäuse entweder ein federbelastetes Kugelgelenk oder Sender und Empfänger werden in den Armen der Zange kardanisch angeordnet.

Weitere Einzelheiten, Merkmale und Vorteile der Erfindung ergeben sich aus der folgenden Beschreibung eines zeichnerisch schematisch dargestellten Ausführungsbeispiels.

Es zeigen:
- Fig. 1: eine schematisch dargestellte Aufsicht auf das erfindungsgemäße Messgerät;
- Fig. 2: eine schematisch dargestellte Ansicht von unten auf das erfindungsgemäße Messgerät;
- Fig. 3: eine schematisch dargestellte Seitenansicht des erfindungsgemäßen Messgerätes;
- Fig. 4: in schematischer auseinandergezogener Perspektive die Zuordnung einer weiteren Ausführungsform des erfindungsgemäßen Messgeräts zur Gasflasche und
- Fig. 5: in schematischer Draufsicht das Messgerät gemäß der Ausführungsform nach Fig. 4.

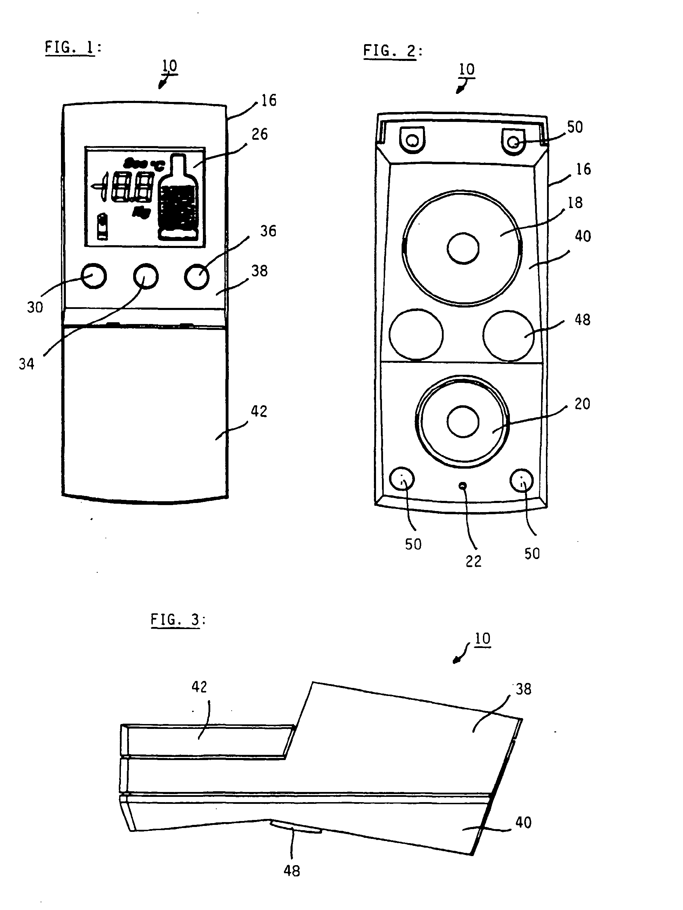

Ein in Figur 1 in einer schematischen Draufsicht dargestelltes Messgerät 10 umfasst ein Gehäuse 16, wobei das Gehäuse 16 aus drei Grundelementen, nämlich einem Deckel 38, einem Batteriedeckel bzw. -fach 42 und einer Schale 40 (vgl. Fig. 2) besteht. Im Deckel 38 ist dabei eine Anzeigevorrichtung 26, insbesondere eine LCD-Anzeige für die ermittelten Messwerte und andere für den Messvorgang wichtige Informationen ausgebildet. Insbesondere kann auf der LCD-Anzeige 26 eine graphische Abbildung einer Gasflasche und deren Inhalt angezeigt werden. Die Messgenauigkeit des Messgerätes 10 erlaubt es, den Gasinhalt einer Gasflasche 12 in Abständen eines 1/2 Kilos anzuzeigen. Des weiteren weist der Deckel 38 drei Bedienungselemente 30, 34, 36 auf. Dabei wird mit der Taste 30 das Gerät ein- oder ausgeschaltet. Mit Betätigung der Taste 34 wird die Umgebungstemperatur in der Anzeige 26 angegeben. Durch ein weiteres Drücken der Taste 34 zeigt das Messgerät 10 in der Anzeige 26 den zuletzt gemessenen Flascheninhalt an. Ein drittes Betätigen der Taste 34 bewirkt schließlich, dass der Ausgangsbildschirm der Anzeige 26 wieder dargestellt wird. Die Taste 36 dient schließlich zum Start der aktuellen Messung des Füllstandes der entsprechenden Gasflasche 12. Die Anzeige 26 zeigt während der aktuellen Messung eine leere Flasche und ein Herabzählen eines 30-Sekunden-dauemden Messvorganges. Anschließend erscheint in der Anzeige 26 der Gasinhalt der Gasflasche 12 vorzugsweise in Kilogramm. Sollte es zu Störungen während des Messvorganges kommen, so erscheint in der Anzeige 26 eine Fehlermeldung.

Figur 2 zeigt eine schematisch dargestellte Ansicht der Unterseite des Messgerätes 10. Man erkennt die Schale 40 des Gehäuses 16. Die Schale 40 ist über Befestigungsmittel 50 mit dem Deckel 38 bzw. dem Batteriedeckel 42 lösbar verbunden. Die Schale 40 weist dabei zwei nebeneinanderliegende Öffnungen zur Aufnahme eines Schallsenders 18 und eines Schallempfängers 20 auf. Des Schallsenders 18 und der Schallempfänger 20 sind mit ihrer Wirkfläche auf die Mantelfläche der Gasflasche 12 auflegbar. Dabei wird ein vom Schallsender ausgesendetes Sendesignal und ein vom Schallempfänger 20 empfangenes Empfangssignal mittels eines Mikroprozessors (nicht dargestellt) verglichen, so dass eine für die Inhaltsmenge der Gasflasche 12 charakteristische Resonanz der Gasflasche 12 ermittelt werden kann. Das vom Sender 18 gesendete Sendesignal besteht dabei aus einem sich über die Zeit erhöhenden Frequenzbereich, insbesondere einem Frequenzbereich, der mit 250 Hz beginnt und bis 2500 Hz hochläuft. Dabei ist der Frequenzbereich langsam erhöhbar. Die Sendesignale des Senders 18 werden dabei zur Erhöhung der Empfindlichkeit für die Resonanzfrequenz der Gasflasche 12 gepulst. Der Sender 18 und der Empfänger 20 bestehen dabei aus entweder zwei piezo-elektrischen Elementen oder aus einem Lautsprecher und einem Mikrophon. Weiterhin erkennt man einen an der Schale 40 angeordneten Temperaturfühler 22. Der Temperaturfühler 22 nimmt während einer Messperiode die Flaschentemperatur bzw. die Umgebungstemperatur auf und korrigiert den für die Resonanz der Gasflasche 12 kennzeichnenden Signalamplitudenwert um den gemessenen Temperaturwert. Der Temperaturfühler 22 kann aber auch direkt auf der im Gehäuse 16 angeordneten Schaltplatine (nicht dargestellt) angeordnet sein.

Zur lösbaren Befestigung des Gerätes 10 an der Gasflasche 12 sind an der Schale 40 Magnete 48 befestigt.

Aus der in Figur 3 schematisch dargestellten Seitenansicht des Meßgerätes 3 erkennt man die vorteilhafte Form der Schale 40. Diese weist nämlich an der dem Deckel 38 abgewandten Seite eine der Mantelfläche der Gasflasche 12 entsprechende Form auf. Damit ist ein sicheres Aufliegen der Wirkflächen des Schallsenders 18 und des Schallempfängers 20 auf der Mantelfläche der Gasflasche 12 gewährleistet.

Das Gehäuse 16 des Meßgerätes 10 besteht aus Kunststoff. Der Schallsender 18 und der Schallempfänger 20 sind bei der dargestellten ersten Ausführungsform durch einen Polyurethanschaum am Gehäuse 16 befestigt. Dadurch werden kleine Unebenheiten an der Oberfläche der Gasflasche 12 und die unterschiedlichen Kalottenformen verschiedener Gasflaschen ausgeglichen.

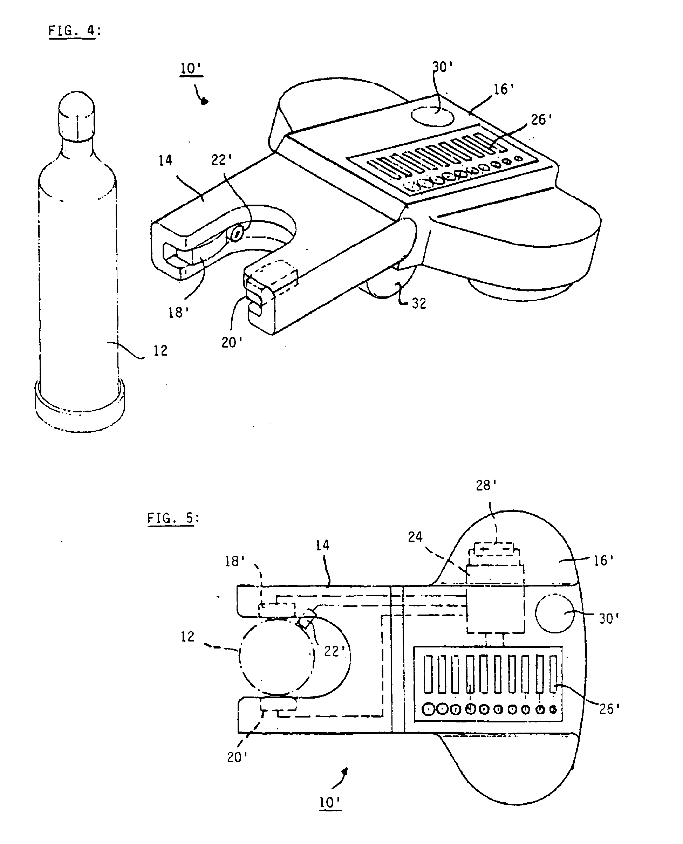

Figur 4 zeigt eine weitere Ausführungsform des Meßgerätes 10.

Das Meßgerät 10' weist einstückig mit einem Gehäuse 16' verbunden zwei zangenartige Arme 14 auf, welche in verschiedener Weise auf die Flasche 12 aufgeklemmt werden können. Das Aufklemmen erfolgt so, daß zwei in der Nähe der offenen Innenseiten der Zange 14 angeordnete piezo-elektrische Elemente 18' und 20' mit ihren Wirkflächen tangential an die Mantelfläche der Flasche 12 angelegt werden können. Das eine Element ist ein Sender 18'. In genau ausgerichteter, gegenüberliegender Position befindet sich in dem anderen Arm der Zange 14 ein Empfänger 20'. Die Klemmung und die genaue Ausrichtung kann entweder durch eine kardanische Anbringung der Arme der Zange 14 im Gehäuse 16' oder durch eine kugelige Lagerung der Elemente 18' und 20' in den Armen der Zange 14 erfolgen. Der Sender 18' sendet eine mit etwa 250 Hz beginnende Frequenz aus, die langsam bis etwa 2500 Hz erhöht wird.

Der Empfänger 20' nimmt die bei ihm ankommende Resonanzfrequenz der Gasflasche 12 auf, die proportional dem Füllstand ist. Dieses Signal wird einer Schaltungsplatine 24 (Fig. 5) zugeleitet, auf der sich auch der Frequenzerzeuger und das Zeitglied zum Steuern des langsamen Hochfahrens der Sendefrequenz befindet. Ferner befindet sich eine Temperaturmeßeinrichtung auf der Platine, für die die Temperatur der Mantelfläche der Flasche 12 durch einen anliegenden Temperaturfühler 22' abgetastet wird. Die gemessene Temperatur ist dem Gasdruck im Innern der Flasche 12 proportional und die Korrektur der gemessenen Resonanzfrequenz findet ebenfalls mit entsprechenden Schaltgliedern auf der Platine 24 statt.

Die Platine wird von einer Batterie 28' gespeist und der Meßvorgang wird über eine Ein/Aus-Taste 30' ausgelöst. Nach wenigen Sekunden ist das Meßergebnis auf einer Anzeige 26' ablesbar. Die Anzeige 26' ist im vorliegenden Ausführungsbeispiel eine LCD-Anzeige mit zehn Stufen. Leuchten beispielsweise alle Stufen auf, ist dies ein Signal für "voll", leuchtet dagegen keine Stufe auf, ist die Flasche "leer". Leuchten fünf Stufen auf, wird "halbvoll" angezeigt.

Die Größe des Meßgeräts 10' ist den verschiedenen genormten Flaschengrößen angepaßt. Kleine Meßgeräte für kleine Flaschen sind einfache Handgeräte. Größere Geräte für große Flaschen können auf der Unterseite des Gehäuses 16' Rollen 32 aufweisen, um das Gerät richtig zur Flasche zu positionieren.

## Patentansprüche

1. Gerät zur Bestimmung des Füllstands einer Gasflasche, nämlich einer Flüssiggasflasche, mit mindestens je einen Schallsender (18, 18') und -empfänger (20, 20'), welche mit ihrer Wirkfläche auf die Mantelfläche der Gasflasche (12) auflegbar sind, und mit einem Mikroprozessor, mit welchem ein vom Schallsender (18, 18') ausgesendetes Sendesignal und ein vom Schallempfänger (20, 20') empfangenes Empfangssignal verglichen werden, so dass eine für den Füllstand der Gasflasche (12) charakteristische Resonanz der Gasflasche (12) ermittelt wird und mit
einem Temperaturfühler (22, 22'), mit welchem während einer Messperiode die Flaschentemperatur aufnehmbar ist, wobei das Gerät (10, 10') die für die Resonanz der Gasflasche (12) kennzeichnende Signalamplitude um den Temperaturmesswert korrigiert.

2. Gerät nach Anspruch 1,
**dadurch gekennzeichnet,**
**dass** das vom Sender (18, 18') gesendete Sendesignal aus einem sich über die Zeit erhöhenden Frequenzbereich besteht.

3. Gerät nach Anspruch 2,
**dadurch gekennzeichnet,**
**dass** der ausgesendete Frequenzbereich mit 250 Hz beginnt und bis 2500 Hz hochläuft.

4. Gerät nach einem der Ansprüche 1 bis 3,
**dadurch gekennzeichnet,**
**dass** der Sender (18, 18') und der Empfänger (20, 20') zwei piezo-elektrische Elemente sind.

5. Gerät nach einem der Ansprüche 1 bis 3,
**dadurch gekennzeichnet,**
**dass** der Sender (18, 18') ein Lautsprecher und der Empfänger (20, 20') ein Mikrophon ist.

6. Gerät nach einem der vorhergehenden Ansprüche,
**dadurch gekennzeichnet,**
**dass** das Gerät ein tragbares Gehäuse (16, 16') umfasst und dass die Inhaltsmenge der Gasflasche (12) auf einer LCD-Anzeige (26, 26') des tragbaren Gehäuses (16, 16') des Geräts (10, 10') ablesbar ist.

7. Gerät nach Anspruch 6,
**dadurch gekennzeichnet,**
**dass** das Gehäuse (16) aus Kunststoff besteht und aus mehreren Elementen (38, 40, 42) aufgebaut ist.

8. Gerät nach Anspruch 7,
**dadurch gekennzeichnet,**
**dass** das Gehäuse (16) eine Schale (40) und einen Deckel (38) aufweist, wobei die Schale (40) mindestens zwei nebeneinander liegende Öffnungen zur Aufnahme des Schallsenders- und empfängers (18, 20) aufweist.

9. Gerät nach Anspruch 8,
**dadurch gekennzeichnet,**
**dass** an der dem Deckel (38) abgewandten Seite der Schale (40) mindestens ein Magnet (48) zur lösbaren Befestigung des Geräts (10) an der Gasflasche (12) angeordnet ist.

10. Gerät nach Anspruch 6,
**dadurch gekennzeichnet,**
**dass** der Sender (18') und der Empfänger (20') an sich gegenüberliegenden Innenseiten von Armen einer Zange (14) an einem alle Teile umfassenden Gehäuse (16') angeordnet sind, wobei die Zange (14) um den Umfang der Gasflasche (12) klemmbar ist.

11. Gerät nach Anspruch 10,
**dadurch gekennzeichnet,**
**dass** die Zange (14) mit einem Kugelgelenk beweglich mit dem Gehäuse (16') verbunden ist.

12. Gerät nach Anspruch 10 oder 11,
**dadurch gekennzeichnet,**
**dass** der Sender (18') und der Empfänger (20') in einer starr mit dem Gehäuse (16') verbundenen Zange (14) um zwei Achsen zur exakten tangentialen Ausrichtung gegenüber der Mantelfläche der Gasflasche (12) beweglich angeordnet sind.

## Claims

1. Apparatus for determining the filling level of a gas bottle, namely of a liquid gas bottle, including each at least one sonic transmitter (18, 18') and receiver (20, 20'), which can be applied to the lateral surface of the gas bottle (12) with their active surface, and including a microprocessor, by which a transmit signal emitted by the sonic transmitter (18, 18') and a received signal received by the sonic receiver (20, 20') are compared such that a resonance of the gas bottle (12) characteristic of the filling level of the gas bottle (12) is determined,
and including
a temperature sensor (22, 22'), by which the bottle temperature can be recorded during a measurement period, wherein the apparatus (10, 10') corrects the signal amplitude characteristic of the resonance of the gas bottle (12) by the temperature measurement value.

2. Apparatus according to claim 1,
**characterized in that**
the transmit signal transmitted by the transmitter (18, 18') is composed of a frequency range increasing over the time.

3. Apparatus according to claim 2,
**characterized in that**
the emitted frequency range begins at 250 Hz and goes up to 2500 Hz.

4. Apparatus according to any one of claims 1 to 3,
**characterized in that**
the transmitter (18, 18') and the receiver (20, 20') are two piezoelectric elements.

5. Apparatus according to any one of claims 1 to 3,
**characterized in that**
the transmitter (18, 18') is a loudspeaker and the receiver (20, 20') is a microphone.

6. Apparatus according to anyone of the preceding claims,
**characterized in that**
the apparatus includes a portable housing (16, 16') and the amount of content of the gas bottle (12) is readable on an LCD display (26, 26') of the portable housing (16, 16') of the apparatus (10, 10').

7. Apparatus according to claim 6,
**characterized in that**
the housing (16) is made of plastic and is constructed of plural elements (38, 40, 42).

8. Apparatus according to claim 7,
**characterized in that**
the housing (16) has a shell (40) and a lid (38), wherein the shell (40) has at least two openings next to each other for receiving the sonic transmitter and receiver (18, 20).

9. Apparatus according to claim 8,
**characterized in that**
at least one magnet (48) for detachable attachment of the apparatus (10) to the gas bottle (12) is disposed on the side of the shell (40) facing away from the lid (38).

10. Apparatus according to claim 6,
**characterized in that**
the transmitter (18') and the receiver (20') are disposed on opposing inner sides of arms of pliers (14) on a housing (16') including all of the parts, wherein the pliers (14) are clampable around the circumference of the gas bottle (12).

11. Apparatus according to claim 10,
**characterized in that**
the pliers (14) are movably connected to the housing (16') by means of a ball joint.

12. Apparatus according to claim 10 or 11,
**characterized in that**
the transmitter (18') and the receiver (20') are disposed in pliers (14) rigidly connected to the housing (16') movably around two axes for exact tangential alignment with respect to the lateral surface of the gas bottle (12).

## Revendications

1. Appareil, destiné à déterminer le niveau de remplissage d'une bouteille de gaz, à savoir d'une bouteille de gaz combustible liquéfié, avec au moins un émetteur (18, 18') et un récepteur (20, 20') de sons chacun, lesquels peuvent être posés, avec leur surface active, sur la surface d'enveloppe de la bouteille de gaz (12) et avec un microprocesseur, avec lequel un signal d'émission, émis par l'émetteur (18, 18') de sons et un signal de réception, reçu par le récepteur (20, 20') de sons sont comparés, de sorte qu'une résonance de la bouteille de gaz (12), caractéristique du niveau de remplissage de la bouteille de gaz (12), est délivrée
et avec
un capteur de température (22, 22'), avec lequel la température de la bouteille peut être captée pendant une période de mesure, l'appareil (10, 10') corrigeant l'amplitude des signaux, caractéristique de la résonance de la bouteille de gaz (12), de la valeur mesurée de la température.

2. Appareil selon la revendication 1,
**caractérisé en ce**
**que** le signal d'émission, envoyé par l'émetteur (18, 18'), se compose d'une gamme de fréquences, qui augmente avec le temps.

3. Appareil selon la revendication 2,
**caractérisé en ce**
**que** la gamme de fréquences émise commence à 250 Hz et monte jusqu'à 2 500 Hz.

4. Appareil selon l'une des revendications 1 à 3,
**caractérisé en ce**
**que** l'émetteur (18, 18') et le récepteur (20, 20') sont deux éléments piézo-électriques.

5. Appareil selon l'une des revendications 1 à 3,
**caractérisé en ce**
**que** l'émetteur (18, 18') est un hautparleur et le récepteur (20, 20') un microphone.

6. Appareil selon l'une des revendications précédentes,
**caractérisé en ce**
**que** l'appareil comprend un boîtier portatif (16, 16') et que la contenance de la bouteille de gaz (12) est lisible sur un écran LCD (26, 26') du boîtier portatif (16, 16') de l'appareil (10, 10').

7. Appareil selon la revendication 6,
**caractérisé en ce**
**que** le boîtier (16) se compose de matière plastique et est constitué de plusieurs éléments (38, 40, 42).

8. Appareil selon la revendication 7,
**caractérisé en ce**
**que** le boîtier (16) présente une enveloppe (40) et un couvercle (38), l'enveloppe (40) présentant au moins deux ouvertures, se trouvant côte à côte et destinées à loger l'émetteur et le récepteur de sons (18, 20).

9. Appareil selon la revendication 8,
**caractérisé en ce**
**qu'**au moins un aimant (48), destiné à fixer l'appareil (10) de manière amovible sur la bouteille de gaz (12), est disposé sur le côté de l'enveloppe (40) tourné vers le couvercle (38).

10. Appareil selon la revendication 6,
**caractérisé en ce**
**que** l'émetteur (18') et le récepteur (20') sont disposés contre des faces intérieures opposées de bras d'une pince (14), contre un boîtier (16') qui comprend toutes les parties, la pince (14) pouvant être serrée autour de la circonférence de la bouteille de gaz (12).

11. Appareil selon la revendication 10,
**caractérisé en ce**
**que** la pince (14) est reliée de manière mobile au boîtier (16'), avec une articulation sphérique.

12. Appareil selon la revendication 10 ou 11,
**caractérisé en ce**
**que** l'émetteur (18') et le récepteur (20') sont disposés de manière mobile dans une pince (14), reliée au boîtier (16') de manière rigide, autour de deux axes, en vue d'une orientation tangentielle précise vis-à-vis de la surface d'enveloppe de la bouteille de gaz (12).
